# EUROPEAN PATENT APPLICATION

(11) **EP 2 910 596 A1**
(43) Date of publication of application: **26.08.2015**
(21) Application number: 13847431.7
(22) Date of filing: 13.09.2013
(51) Int. Cl.: C08J 5/04, B29B 11/16, B29C 70/06, D03D 1/00, D03D 3/02, D04B 1/22, D04B 21/20, D04C 1/12

(54) **REINFORCING FIBER/RESIN FIBER COMPOSITE FOR PRODUCTION OF CONTINUOUS-FIBER-REINFORCED THERMOPLASTIC RESIN COMPOSITE MATERIAL AND PROCESS FOR MANUFACTURING SAME**

(30) Priority: 17.10.2012 JP 2012229891
(71) Applicant: Gifu University, Gifu-shi Gifu 501-1193 (JP)
(72) Inventor: OHTANI Akio, Gifu-shi Gifu 501-1193 (JP); NAKAI Asami, Gifu-shi Gifu 501-1193 (JP)
(74) Representative: Isarpatent
(86) International application number: PCT/JP2013/074803
(87) International publication number: WO 2014/061384

(57) **Abstract**

The present invention provides a technique for impregnating a continuous fiber with a thermoplastic resin having a high melt viscosity in a short time, and thereby enables short-cycle molding of a continuous-fiber-reinforced thermoplastic resin composite material. The present invention pertains to a reinforcing fiber/resin fiber composite (10) which is to be used for the production of a continuous-fiber-reinforced thermoplastic resin composite material and which is characterized in that: the composite (10) comprises a continuous fiber bundle (1) and a thermoplastic resin fiber (cover (2)) which covers the periphery of the continuous fiber bundle (1) in such a state that the continuous fiber bundle (1) is not constricted; and the continuous fiber bundle (1) can be flattened. The present invention also pertains to a process for manufacturing the same.

## Description

### Technical Field

The present invention relates to a reinforcing fiber/resin fiber composite for production of a continuous-fiber-reinforced thermoplastic resin composite material and a method for manufacturing the same.

### Background Art

Commingled yarns (combined filament yarns), prepreg tapes, and microbraided yarns (MBY) are known as intermediate materials for use in the production of a fiber-reinforced thermoplastic resin composite material.

Commingled yarns have excellent impregnation property, but are restricted in that the materials which can be selected so as to be combined with them are limited to general-purpose thermoplastic resins and involve the problem of damage of reinforcing fibers in the filament combining process.

Prepreg tapes have the merit that impregnation can be carried out in a short time because their fibers are impregnated with a resin in advance, but are in the form of tapes, not fiber bundles and have high rigidity, and therefore involve the problem that the shape of an object to which they can be applied is limited to a flat surface and a curved surface.

On the other hand, microbraided yarns can be combined with various thermoplastic resin fibers, and have the excellent merits of less damage of reinforcing fibers and possible preparation at a relatively inexpensive cost.

A continuous-fiber-reinforced thermoplastic resin composite material including a thermoplastic resin as a matrix resin and a continuous fiber as a reinforcing fiber has recycle performance as compared with a thermosetting resin composite material, and can maximally utilize the strength of the reinforcing fibers because of the fiber continuity. Thus, drastic expansion of the demand therefor as a structural material for automobiles and airplanes has been expected.

However, the melt viscosity of the thermoplastic resin is quite higher than that of a thermosetting resin before curing (when an epoxy resin and a nylon (PA6) resin are taken for examples of the thermosetting resin and the thermoplastic resin, respectively, the melt viscosity is several tens of Pa·s for the former, but is several hundreds to several thousands of Pa·s for the latter). Hence, the thermoplastic resin involves the problem of difficulty in impregnation into the continuous fibers during molding of a composite material.

Especially, in the continuous-fiber-reinforced composite material, fibers are not forced to flow, and such a molding form that a resin is impregnated into a fiber assembly is employed. Therefore, impregnation is made more difficult.

In the continuous-fiber-reinforced composite material, excellent rigidity and strength of all of many continuous fibers can be derived by impregnating the resin into the continuous fiber bundle thoroughly, which causes deterioration in dynamic characteristics in molded articles with insufficient impregnation. Therefore, it is important to maximally reduce an un-impregnated region.

At present, various intermediate materials and molding methods which allow a resin to be impregnated into continuous fibers as easily as possible have been developed to prepare a continuous-fiber-reinforced thermoplastic composite material. The specific features and problems of those conventional techniques are as follows.

The invention described in Patent Document 1 is a combined filament yarn for a composite material (intermediate material having impregnation property) for a long fiber-reinforced thermoplastic resin composite material, including a continuous reinforcing fiber bundle and a continuous thermoplastic resin fiber bundle which are uniformly combined together. Such a combined filament yarn for a composite material has excellent impregnation property as explained above, but involves the problem that reinforcing fibers are damaged in the filament combining step, and so on, in addition to the limited combination of fibers and resins.

The invention described in Patent Document 2 relates to a glass fiber roving, which is basically different from the present invention relating to a reinforcing fiber/resin fiber composite for production of a continuous-fiber-reinforced thermoplastic resin composite material.

The invention described in Patent Document 3 relates to an intermediate material obtained by covering continuous fibers with resin fibers using a braid technique, which has the feature of using a braid technique in common with the present invention.

However, this invention involves the problems of difficulty in impregnation, long impregnation time, and the like since reinforcing fibers are covered with a tubular material of thermoplastic resin fibers.

In order to mold a continuous-fiber-reinforced thermoplastic resin composite material in a short cycle, techniques of impregnating continuous fibers with a thermoplastic resin having a high melt viscosity in a short time are required. One of the techniques is a fibrous intermediate material technique involving arranging, near continuous fibers, a resin which serves as a matrix in the form of fibers so that, when molded at a high temperature, the resin fibers melt and are impregnated into the continuous fibers.

The microbraided yarn 40 is a fibrous intermediate material prepared by a method using a braid technique to provide a cover 41 of many resin fibers around a continuous fiber bundle 1 (see FIG. 10 of Patent Document 4).

The merits of this intermediate material reside in: that the intermediate material can be easily prepared since covering is merely applied, by a braid technique, to any combination of fibers; that the proportion of the resin fibers can be easily controlled; and that the damage of the fibers is suppressed by covering of reinforcing fibers.

However, the continuous fiber bundle 1 is tightened from the periphery by the cover 41 composed of many resin fibers which form a braid structure, and thus the gap between the cover 41 of the resin fibers and the continuous fiber bundle 1 is almost 0%, so that the cross section of the continuous fiber bundle is in a circular shape (see

FIG. 11).

This phenomenon causes a longer distance T2 at which the resin fibers melt and are impregnated into the continuous fiber bundle 1 and thus a longer time required for impregnation. The density of the continuous fiber bundle becomes higher due to tightening, which thus causes inhibition of impregnation.

### Citation List

### Patent Literatures

Patent Document 1: JP H9-324331 A
Patent Document 2: JP 2005-529047 T
Patent Document 3: JP 2012-136653 A
Patent Document 4: JP 2004-115995 A

### SUMMARY OF INVENTION

### Technical Problem

The problem to be solved by the present invention is that much time is required for impregnation due to the "circular" cross section and "high density" of the continuous fiber bundle in the production of a continuous-fiber-reinforced thermoplastic resin composite material. An object of the present invention is to provide a technique which solves these two problems inhibiting impregnation and allows for impregnation of continuous fibers (reinforcing fibers) with a thermoplastic resin having a high melt viscosity in a short time, thereby enabling short-cycle molding of the continuous-fiber-reinforced thermoplastic resin composite material. Solution to Problem

The present invention is characterized by employing the following preparation methods in order to overcome the tightening of continuous fibers by many thermoplastic resin fibers and to make a continuous fiber bundle deformable so as to be flat in the production of an intermediate material for a continuous-fiber-reinforced thermoplastic resin composite material.
(1) A cover structure made of a thermoplastic resin fiber is prepared with respect to a guide (for example, a metal round rod or metal pipe) having a diameter one size larger than that of the continuous fiber bundle, and a continuous fiber bundle is covered with the cover structure (for example, a braid structure, a woven fabric structure or a knitted fabric structure), thereby preparing an intermediate material free of tightening to the continuous fiber bundle.
(2) When a braid structure is used to make a cover by the thermoplastic resin fiber, not only braids oriented obliquely to the longitudinal direction, but also central yarns oriented in the longitudinal direction are inserted between the braids, thereby suppressing the deformation of the braid structure and tightening applied to the continuous fiber bundle.

In a conventional microbraided yarn, the technique of inserting a central yarn is used for the purpose of increasing the strength of the braid structure. However, the present invention is characterized in that the central yarn is inserted for the purpose of maintaining the shape of a braid structure having one size larger than that of the continuous fiber bundle prepared in (1).

The means for solving the problem by the present invention is specifically characterized by:
"a reinforcing fiber/resin fiber composite for production of a continuous-fiber-reinforced thermoplastic resin composite material, comprising: a continuous fiber bundle; and a thermoplastic resin fiber which covers the periphery of the continuous fiber bundle without tightening it, wherein the continuous fiber bundle can be deformed so as to be flat."

Further, the above-described thermoplastic resin fiber of the present invention is characterized by having any of the following structures (a) to (c):
(a) a braid structure composed of braids oriented obliquely to the longitudinal direction and a central yarn oriented in the longitudinal direction so as to be inserted between the braids and covering the periphery of the continuous fiber bundle in a net-like form;
(b) a woven fabric structure composed of warps and wefts crossing orthogonally to the longitudinal direction and covering the periphery of the continuous fiber bundle in a net-like form; and
(c) a knitted fabric structure composed of yarns which form loops and covering the periphery of the continuous fiber bundle in a net-like form.

Also, the present invention is characterized by:
"a method for manufacturing a reinforcing fiber/resin fiber composite for production of a continuous-fiber-reinforced thermoplastic resin composite material, the reinforcing fiber/resin fiber composite comprising: a continuous fiber bundle; and a thermoplastic resin fiber which covers the periphery of the continuous fiber bundle without tightening it, wherein the continuous fiber bundle can be deformed so as to be flat, the method comprising: preparing a cover structure comprising a thermoplastic resin fiber so as to cover a guide having an outer diameter which is one size larger than that of the continuous fiber bundle; and inserting and arranging the continuous fiber bundle inside the cover structure."

Further, the present invention is characterized by:
"a method for manufacturing a reinforcing fiber/resin fiber composite for production of a continuous-fiber-reinforced thermoplastic resin composite material, the reinforcing fiber/resin fiber composite comprising: a continuous fiber bundle; and a thermoplastic resin fiber which covers the periphery of the continuous fiber bundle without tightening it, wherein the continuous fiber bundle can be deformed so as to be flat, the method comprising: preparing a cover structure comprising a thermoplastic resin fiber so as to cover a guide having an outer diameter which is one size larger than that of the continuous fiber bundle; inserting the continuous fiber bundle inside the guide; and extracting, from the guide, the continuous fiber bundle and the cover structure comprising the thermoplastic resin fiber at the same time, thereby inserting and arranging the continuous fiber bundle inside the cover structure."

Further, the above-described continuous fiber bundle of the present invention is characterized in that it can be deformed in such a manner that the aspect ratio is a value of 1.2 or more.

Furthermore, the above-described continuous fiber bundle of the present invention is characterized in that it can be deformed in such a manner that the aspect ratio is preferably a value of 3 to 10.

### Advantageous Effects of Invention

By employing the above-described configuration, in the reinforcing fiber/resin fiber composite for production of a continuous-fiber-reinforced thermoplastic resin composite material according to the present invention, the tightening applied to the continuous fiber bundle by the resin fibers looses, unlike prior art intermediate materials, thereby making it possible to make the cross section of the continuous fibers deformable to be flat and to shorten the distance to the center (impregnation distance), so that the impregnation time is shortened. Also, due to a decreased fiber density, the molten resin is easily impregnated into the continuous fiber bundle.

Accordingly, in the reinforcing fiber/resin fiber composite of the present invention, when press molding is carried out at the same temperature and pressure and for the same time as conventional ones, the proportion of un-impregnated fibers (un-impregnation rate) significantly decreases, thereby making it possible to drastically shorten the molding time and to enhance the strength of the molded article.

Further, the present invention can provide an intermediate material which can be molded as quickly as possible by shortening of the impregnation time, thereby providing the excellent effects of improvement in mass production cycle and reduction in cost for production of a molded article.

In the meantime, there is no problem caused by employing the flat or circular shape of the composite material in the present invention.

Also, since the reinforcing fiber/resin fiber composite of the present invention includes a thermoplastic resin fiber, recycling and secondary processing can be easily carried out.

Therefore, the present invention can provide a lightweight material for automobile production, airplane production, and the like and a method for manufacturing the same, and is quite effective in various industrial fields.

### BRIEF DESCRIPTION OF DRAWINGS

FIG. 1 is a cross sectional view schematically showing a state where a reinforcing fiber/resin fiber composite for production of a continuous-fiber-reinforced thermoplastic resin composite material according to the present invention is deformed so as to be flat.
FIG. 2 is a perspective view showing one example of the procedures for manufacturing the reinforcing fiber/resin fiber composite for production of a continuous-fiber-reinforced thermoplastic resin composite material according to the present invention.
FIG. 3 is a plan view illustrating other structures which can be utilized as a cover of resin fibers according to the present invention.
FIG. 4 is a flowchart showing the procedures for manufacturing the reinforcing fiber/resin fiber composite for production of a continuous-fiber-reinforced thermoplastic resin composite material according to the present invention.
FIG. 5 is an end view showing the shape of a guide which can be used in the production of the reinforcing fiber/resin fiber composite according to the present invention.
FIG. 6 is a perspective view showing other examples of the procedures for manufacturing the reinforcing fiber/resin fiber composite for production of a continuous-fiber-reinforced thermoplastic resin composite material of the present invention.
FIG. 7 includes cross sectional photographs showing a state where a thermoplastic resin is impregnated into a continuous fiber bundle, in which (A) is a cross sectional view showing a conventional continuous fiber bundle, and (B) is a cross sectional view showing the continuous fiber bundle of the present invention.
FIG. 8 is a graph view showing the results of the measurement of the un-impregnation rate of the thermoplastic resin for the conventional reinforcing fiber/resin fiber composite and the reinforcing fiber/resin fiber composite according to the present invention.
FIG. 9 is a graph view showing the results of the measurement of the tensile strength for the conventional reinforcing fiber/resin fiber composite and the reinforcing fiber/resin fiber composite according to the present invention.
FIG. 10 includes a perspective view schematically showing the conventional reinforcing fiber/resin fiber composite and a photographic side view showing the same.
FIG. 11 is a cross sectional view schematically showing the conventional reinforcing fiber/resin fiber composite.

### Description of Embodiments

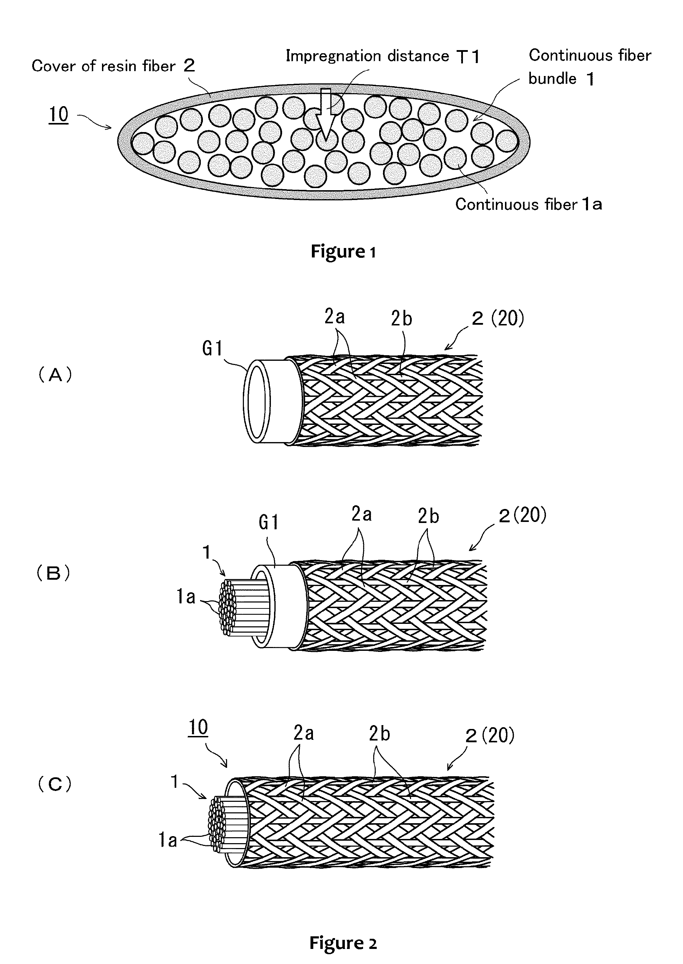

The present invention is directed to a reinforcing fiber/resin fiber composite 10 for production of a continuous-fiber-reinforced thermoplastic resin composite material, including a continuous fiber bundle 1 made of many continuous fibers 1a and a thermoplastic resin fiber (a cover 2) which covers the periphery of the continuous fiber bundle 1, without tightening it, in a net-like form wherein the continuous fiber bundle 1 can be deformed so as to be flat, as shown in FIG. 1, and the composite is used as an intermediate material for production of a continuous-fiber-reinforced thermoplastic resin composite material.

In the present invention, examples of the state where the above-described continuous fiber bundle is deformed to be "flat" suitably include those where the above-described continuous fiber bundle has an aspect ratio ranging from about 3 to about 10.

Specifically, those in which the long diameter: short diameter ratio ranges from 3 to 10 when the continuous fiber bundle has an elliptical cross sectional shape or in which the long side: short side ratio ranges from 3 to 10 when the continuous fiber bundle has a rectangular cross sectional shape are suitable as embodiments of the present invention.

The continuous fiber bundle has an aspect ratio of about 4.0 if its cross sectional shape is in the state illustrated in FIG. 1.

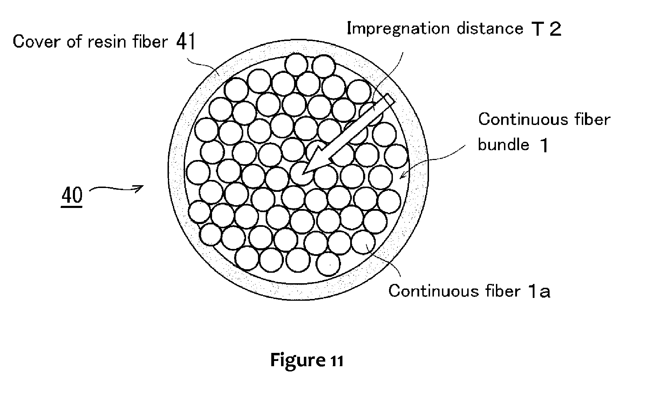

Here, it is considered that composites, in which the continuous fiber bundle has an almost circular cross sectional shape as shown in FIG. 11, and, even when pressed down with fingers, would not be deformed in such a manner that the aspect ratio is a value of 1.2 or more, are such that the cover tightens the continuous fiber bundle, and thus fall outside the scope of the present invention.

As the above-described continuous fiber bundle 1 of the present invention, light materials having excellent flexibility and strength such as glass fiber bundles, carbon fiber bundles, aramid fiber bundles, metal fiber bundles, and ceramic fiber bundles can be suitably used. However, the present invention is not limited to these materials, and continuous fiber bundles made of natural fibers such as jute and kenaf may be employed.

Further, it is also possible to appropriately combine two or more of these materials for use, to combine the same materials different in thickness or shape for use, or to use spun materials.

Examples of resins which can be suitably used as the resin constituting the cover 2 of the above-described thermoplastic resin fiber of the present invention include, but are not limited to, materials such as polyolefin-based resins (commodity resins) such as polyethylene and polypropylene, polyamide-based resins such as nylon, polyester-based resins, and polyether ether ketones (engineered resins).

Also, in the present invention, desirably, the above-described thermoplastic resin fiber has a braid structure 20 composed of braids 2a continuously oriented obliquely to the longitudinal direction and central yarns 2b oriented in the longitudinal direction so as to be inserted between the braids 2a, and always loosely covers the periphery of the above-described continuous fiber bundle 1 in a net-like form (see FIGs. 1 and 2).

Specifically, the configuration employing the central yarns 2b oriented in the longitudinal direction as described above makes it possible to prevent the tightening of the continuous fiber bundle 1 by the thermoplastic resin fiber made in a net-like form even when the cover 2 of the thermoplastic resin fiber is pulled in the longitudinal direction.

Thus, the cross section of the continuous fiber bundle 1 can always be deformed so as to be flat, and the distance (thickness) to the center of the continuous fiber bundle 1 is shortened. Therefore, the cover 2 of the thermoplastic resin fiber can obtain the effect of shortening of the time for impregnating the molten resin into the continuous fiber bundle 1. Also, the density of the continuous fiber bundle 1 is lowered, thereby making it possible to obtain the effect that the molten thermoplastic resin is further easily impregnated into the continuous fiber bundle 1.

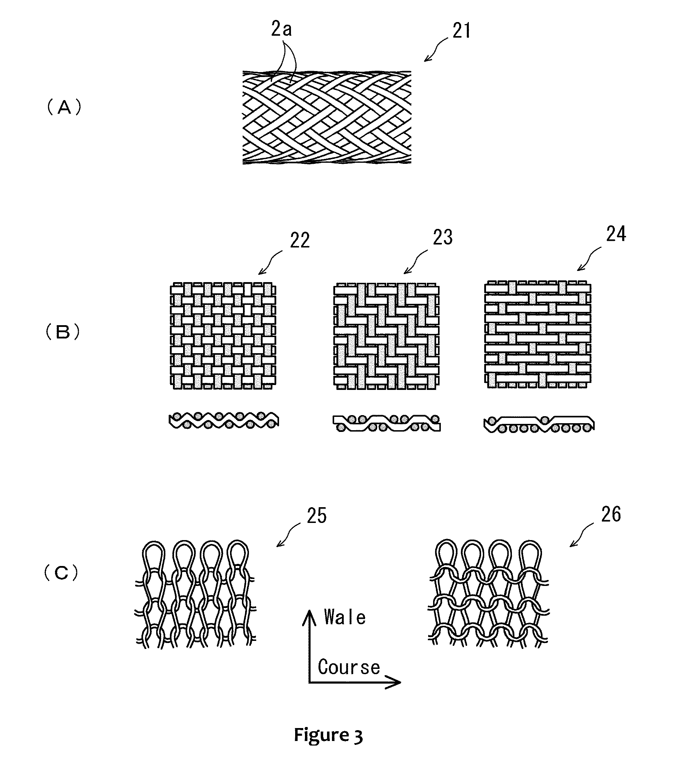

Further, as the cover structure of the cover 2 of the thermoplastic resin fiber which covers the periphery of the above-described continuous fiber bundle 1 without tightening it, the following structures may be employed, in addition to the above-described braid structure 20:
a braid structure 21 including no central yarns as shown in FIG. 3 (A);
woven fabric structures 22, 23, and 24 composed of warps and wefts crossing orthogonally to the longitudinal direction and covering the periphery of the above-described continuous fiber bundle 1 in a net-like form, as shown in FIG. 3 (B); or
knitted fabric structures 25 and 26 composed of yarns which form loops and covering the periphery of the above-described continuous fiber bundle 1 in a net-like form, as shown in FIG. 3 (C).

The above-described woven fabric structures 22, 23, and 24 include plain weave (Plain), twill weave (Twill), and satin weave (Satin) from the left side in FIG. 3(B), in which the plain weave has a structure where warps and wefts cross each other in the state where one weft passes over one warp and then under the next warp, and the twill weave has a structure where warps and wefts cross each other in the state where one weft passes over (or under) one warp and then under (or over) the next two warps.

The satin weave has a structure where the number of the cross points of warps and wefts is maximally reduced and, further, the cross points are dispersed in a non-continuous manner. The right-side view in FIG. 3 (B) shows an example of 5-harness satin having a structure where warps and wefts cross each other in the state where one weft passes over (or under) one warp and then under (or over) the next four warps.

The above-described knitted fabric structures 25 and 26 include a weft knitted fabric in which loops are formed while fiber bundles move in the lateral direction and a warp knitted fabric in which loops are formed while fiber bundles move in the vertical direction. The weft knitted fabric structure shown in FIG. 3(C) is the simplest plain knitted structure, which is frequently used in usually-used shirts, socks, sweaters, and so on.

One of the merits of the weft knitted fabric which is beneficial as the cover structure by the resin fiber, which covers the periphery of the continuous fiber bundle constituting the reinforcing fiber/resin fiber composite in a net-like form resides in its high stretchability (the breaking strain is 100% or more) and excellent shapability into a complex shape. Weft knitted fabrics having various structures, in addition to the plain knitted structure, can be used to prepare a cover structure by the resin fiber, which covers the periphery of the continuous fiber bundle 1 in a net-like form.

The proportion of the continuous fiber bundle 1 and the thermoplastic resin fibers 2a and 2b which cover the periphery thereof in a net-like form may be appropriately determined by calculation, for example, from the strength, density, weight, and production cost required of finally-molded products.

Also, the present invention relates to a method for manufacturing a reinforcing fiber/resin fiber composite for production of a continuous-fiber-reinforced thermoplastic resin composite material, the reinforcing fiber/resin fiber composite including: a continuous fiber bundle 1; and thermoplastic resin fibers 2a and 2b which cover the periphery of the continuous fiber bundle 1 without tightening it, wherein the continuous fiber bundle 1 can be deformed so as to be flat, the method including: preparing a cover structure (20 to 26) composed of a thermoplastic resin fiber so as to cover a guide having an outer diameter which is one size larger than that of the above-described continuous fiber bundle; and inserting and arranging the continuous fiber bundle inside the cover structure.

Desirably, the cover 2 made of the above-described thermoplastic resin fibers have a braid structure 20 composed of braids 2a continuously oriented obliquely to the longitudinal direction and central yarns 2b oriented in the longitudinal direction so as to be inserted between the braids 2a, and always loosely covers the periphery of the above-described continuous fiber bundle 1 in a net-like form, as explained above. Examples

### Example 1

Next, Example 1 of a reinforcing fiber/resin fiber composite for production of a continuous fiber-reinforced thermoplastic resin composite material will be explained.

A continuous fiber bundle 1 used in Examples of a reinforcing fiber/resin fiber composite 10 as embodiments of the present invention is a fiber bundle that is made of 12,000 carbon fibers having a thickness of 7 µm (T700-12K manufactured by TORAY INDUSTRIES, INC.) and in which continuous fibers 1a extend in the longitudinal direction without tangling.

The thermoplastic resin fibers, which cover the periphery of the above-described continuous fiber bundle 1 of Examples, as embodiments of the present invention, in a net-like form without tightening it, include 24 fibers of Nylon 66 (PA66-470T manufactured by TORAY INDUSTRIES, INC.) of 470 tex, and have a braid structure 20 composed of braids 2a continuously oriented obliquely to the longitudinal direction and central yarns 2b oriented in the longitudinal direction so as to be inserted between the braids 2a, as shown in FIG. 2.

Here, when the cross section of the reinforcing fiber/resin fiber composite composed of the above-described continuous fiber bundle 1 and the thermoplastic resin fibers 2a and 2b was assumed to be a concentrically circular shape in this Example, the diameter of the cover 2 made of resin fibers was 1.5 mm, the diameter of the continuous fiber bundle 1 made of reinforcing fibers was 0.9 mm, and the gap between the cover 2 of resin fibers and the continuous fiber bundle 1 was 0.3 mm.

The aspect ratio when the reinforcing fiber/resin fiber composite 10 of this Example is deformed so as to be flat is about 7.

The configuration employing the central yarns 2b oriented in the longitudinal direction in this manner can prevent the occurrence of tightening of the continuous fiber bundle 1 by the thermoplastic resin fibers made in a net-like form even if the thermoplastic resin fibers are pulled in the longitudinal direction.

Therefore, the cross section of the continuous fiber bundle 1 can always be deformed so as to be flat, and the distance to the center of the continuous fiber bundle 1 is shortened, thereby making it possible to obtain the effect of shortening of the impregnation time.

Also, the density of the continuous fiber bundle 1 is lowered, thereby making it possible to obtain the effect that the molten thermoplastic resins are further easily impregnated into the continuous fiber bundle 1.

Hence, the reinforcing fiber/resin fiber composite 10 configured in the above-described manner can be used to produce a lightweight high-strength molded article as is conventionally done, and has the merits that the composite 10 is easy to be molded into various shapes and, besides, that the molding time can be shortened, unlike the conventional techniques, and is therefore a quite practical intermediate material for production of a continuous-fiber-reinforced thermoplastic resin composite material.

Specific molding conditions for the intermediate material for production of a continuous-fiber-reinforced thermoplastic resin composite material according to the present invention are roughly as follows.

### Molding temperature ··· melting point of resin + about 30°C

### Pressure ··· 1 to 10 MPa

### Molding time ··· 1 to 30 minutes

Next, one example of a method for production of the reinforcing fiber/resin fiber composite 10 of the above-described Example as an embodiment of the present invention will be explained.

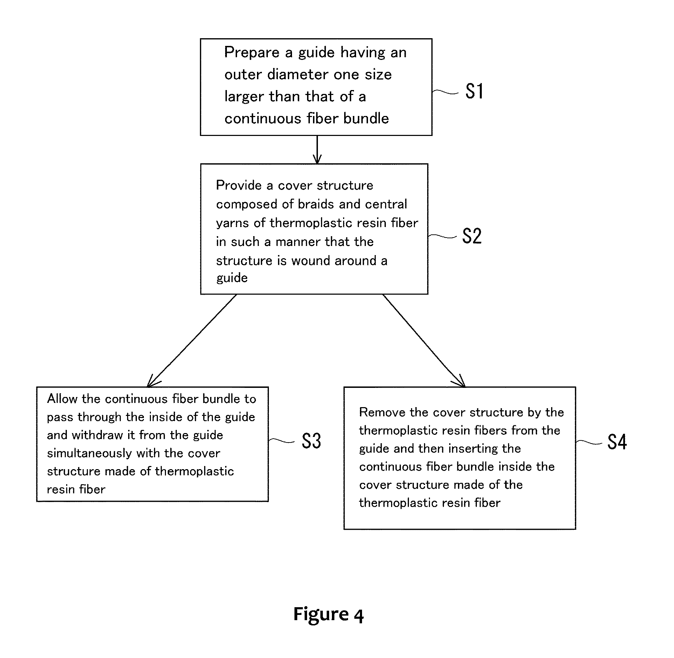

Firstly, a guide G1 having an outer diameter which is one size larger than that of a continuous fiber bundle 1 is provided in order to produce a cover structure (20) by thermoplastic resin fibers for covering the continuous fiber bundle 1 as reinforcing fibers, as shown in FIGs. 2 and 4 (step S1).

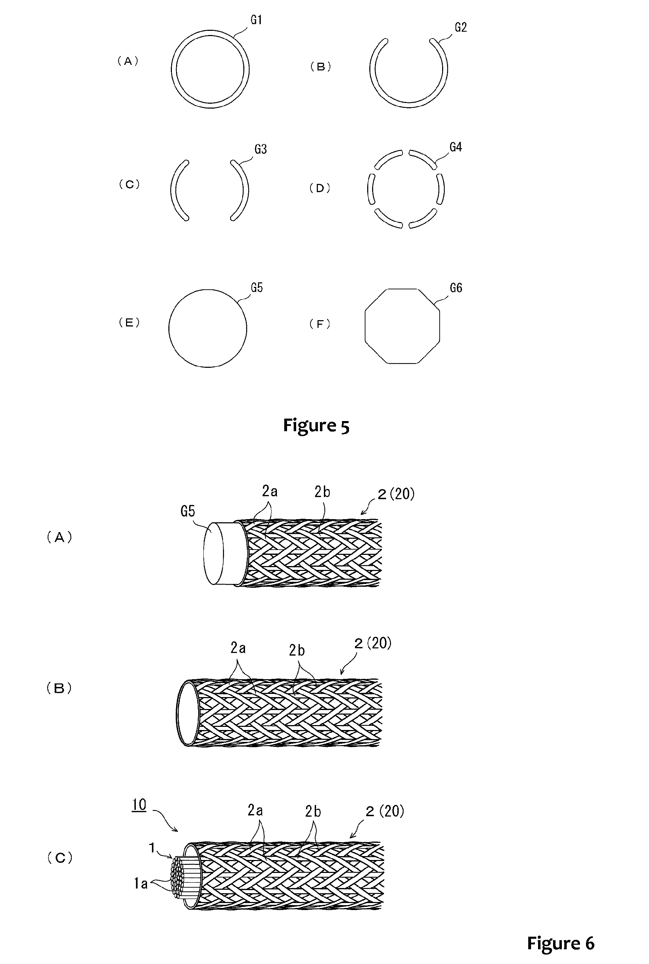

While this guide G1 is preferably in a cylindrical (pipe-like) shape as shown in FIG. 5(A), the guide to be used may also be a guide G2 (having a C- or U-shaped cross section) having a partly-notched cylindrical shape as shown in FIG.5(B) or a guide G3, G4 made of a plurality of rod-like materials or plate-like materials having an arcuate cross section.

When a guide is composed of a plurality of rod-like materials or plate-like materials as described above, they are preferably arranged so as to be aligned on the circumference as shown in FIG. 5(C) and 5(D).

Next, a cover structure (braid structure 20) composed of braids 2a and central yarns 2b of thermoplastic resin fibers is provided in such a manner that the cover structure is wound around and covers the above-described G1 (step S2).

Then, the continuous fiber bundle 1 made of continuous fibers 1a is allowed to pass through the inside of the guide G1, and is withdrawn from the guide simultaneously with the cover structure (braid structure 20) by thermoplastic resin fibers (step S3), thereby making it possible to produce a reinforcing fiber/resin fiber composite 10 composed of the continuous fiber bundle 1 loosely covered with the cover 2 made of the thermoplastic resin fibers 2a and 2b.

In the meantime, the reinforcing fiber/resin fiber composite 10 was manufactured by extracting the continuous fiber bundle 1 and the thermoplastic resin fibers 2a and 2b from the guide G1 at the same time (the above-described step S3) in the above-described one example of the production method. However, a method for manufacturing the reinforcing fiber/resin fiber composite 10 by removing the cover structure (braid structure 20) made of thermoplastic resin fibers from the tubular or rod-like guide and then inserting the continuous fiber bundle 1 inside the cover 2 made of thermoplastic resin fibers (step S4) may also be employed in place of the step S3 (see FIG. 6).

When a solid rod-like guide G5 is used in the above-described step S4, a round rod having a circular cross section as its outer shape is preferably used. However, a polygonally columnar guide G6 may also be used.

Next, for the reinforcing fiber/resin fiber composite 10 of Example 1 configured in the above-described manner, the results of comparison in performance with a conventional microbraided yarn 40 will be explained.

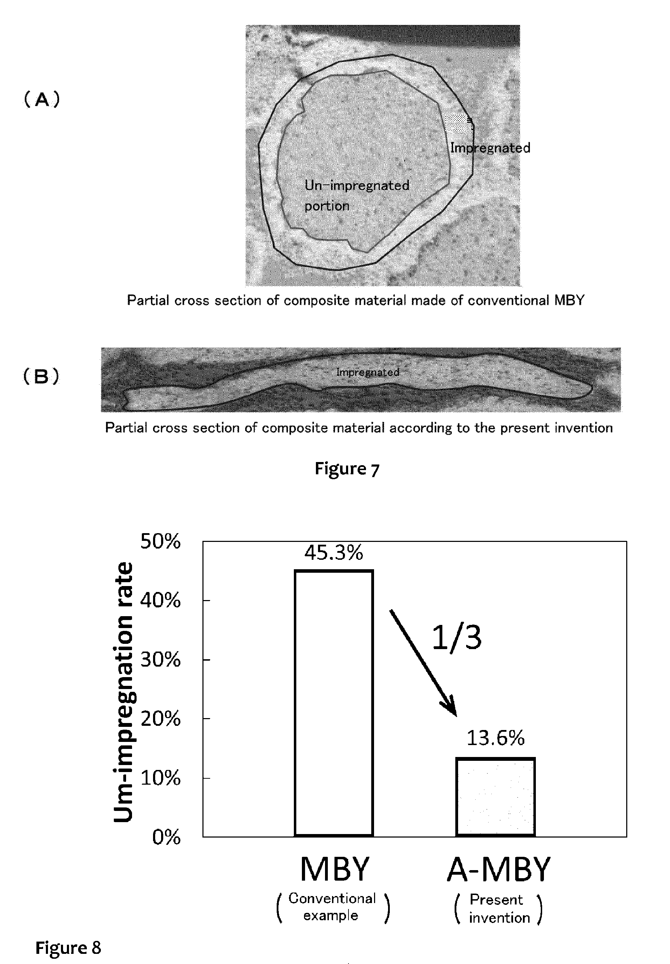

When the reinforcing fiber/resin fiber composite of Example 1 configured in the above-described manner and the conventional microbraided yarn configured by using the same materials were press-molded at the same temperature (290 degrees Celsius) and the same pressure (5MPa) for the same time (10 minutes), it could be confirmed that the proportion of an un-impregnated portion (un-impregnation rate) in the reinforcing fiber/resin fiber composite of Example 1 was 1/3 or less of that of the conventional microbraided yarn 40, as shown in the partial cross sectional photograph in FIG. 7 and the graph in FIG. 8, and that the molding time can be drastically shortened.

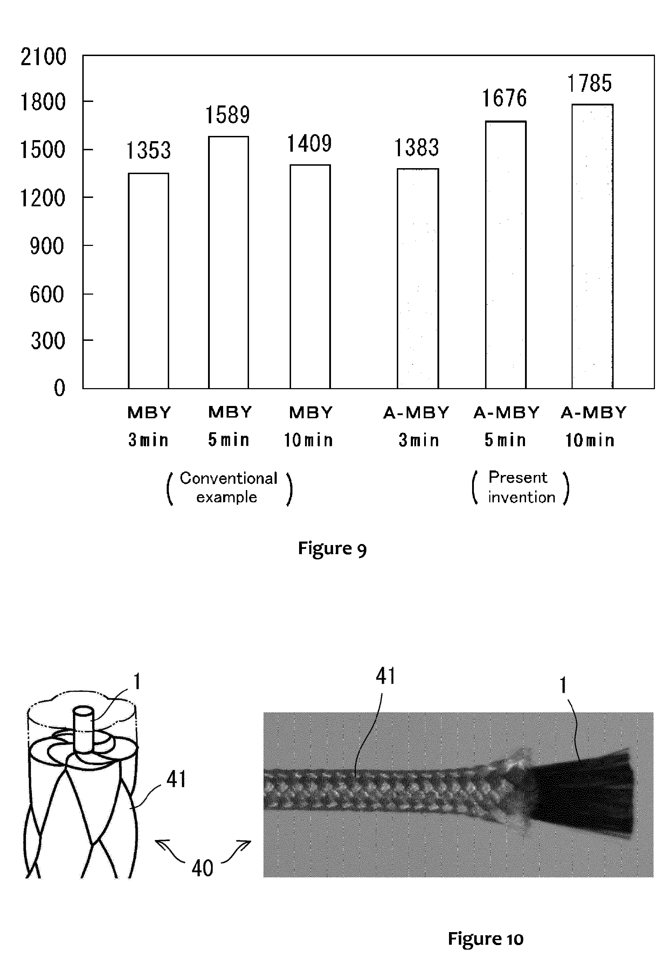

Further, when the products obtained by press-molding the reinforcing fiber/resin fiber composite 10 of Example 1 configured in the above-described manner and the conventional microbraided yarn configured by using the same materials, respectively, at the same temperature (290 degrees Celsius) and the same pressure (5MPa) for the same time (3, 5, and 10 minutes) were compared in terms of tensile strength, the results obtained were as shown in the graph in FIG. 9. It could be confirmed that, when they were molded for the same molding time, the molded article obtained by using the reinforcing fiber/resin fiber composite 10 of Example 1 as an intermediate material has excellent strength as compared with the molded article obtained by using the conventional microbraided yarn 40 as an intermediate material.

That is, the reinforcing fiber/resin fiber composite 10 according to the present invention is such that the molten resin is 100% impregnated into the continuous fiber bundle 1 in a short time, thereby making it possible to obtain a molded article having predetermined strength. Therefore, the molded article manufactured by using the reinforcing fiber/resin fiber composite 10 as an intermediate material according to the present invention provides an improved mass production cycle, and can contribute to cost reduction.

The present invention is not limited to the above-described respective embodiments, and can be modified and carried out within the scope of the purport of the present invention, and may also be carried out by combining a plurality of thermoplastic resin fibers which are different in properties such as color, strength, and thickness to produce a net-like cover structure.

For example, when a braid structure composed of braids and central yarns is employed as the cover structure, the present invention may be carried out by using yarns which are different in properties as the braids and the central yarns.

The "net-like cover structure" used in the present invention includes those having dense "stitches" without no gap between fibers and those having gaps between fibers.

### Industrial Applicability

The present invention can easily provide various continuous-fiber-reinforced thermoplastic resin composite materials, and thus can be suitably utilized as an intermediate material for production of a structural member in various fields such as automobile production and airplane production.

### Reference Signs List

1. Continuous fiber bundle
1a. Continuous fiber
2. Cover of resin fiber
2a. Braid (resin fiber)
2b. Central yarn (resin fiber)
10. Reinforcing fiber/resin fiber composite (intermediate material for production of continuous-fiber-reinforced thermoplastic resin composite material)
20. Braid structure (cover structure)
21. Braid structure (cover structure)
22. Woven fabric structure (cover structure: plain weave)
23. Woven fabric structure (cover structure: twill weave)
24. Woven fabric structure (cover structure: satin weave)
25. Knitted fabric structure (cover structure: plain knitted)
26. Knitted fabric structure (cover structure: plain knitted)
40. Conventional microbraided yarn
41. Conventional cover of resin fiber
G1. Guide (pipe)
G2. Guide (having C- or U-shaped cross section)
G3. Guide (composed of a plurality of plate-like materials)
G4. Guide (composed of a plurality of rod-like or plate-like materials)
G5. Guide (round rod)
G6. Guide (polygonal column)
T1. Impregnation distance
T2. Conventional impregnation distance

## Claims

1. A reinforcing fiber/resin fiber composite for production of a continuous-fiber-reinforced thermoplastic resin composite material, comprising:
a continuous fiber bundle; and
a thermoplastic resin fiber which covers the periphery of the continuous fiber bundle without tightening it,
wherein the continuous fiber bundle can be deformed so as to be flat.

2. The reinforcing fiber/resin fiber composite for production of a continuous-fiber-reinforced thermoplastic resin composite material according to claim 1,
wherein the thermoplastic resin fiber has any of the following structures (a) to (c):
(a) a braid structure comprising braids oriented obliquely to the longitudinal direction and a central yarn oriented in the longitudinal direction so as to be inserted between the braids and covering the periphery of the continuous fiber bundle in a net-like form;
(b) a woven fabric structure comprising warps and wefts crossing orthogonally to the longitudinal direction and covering the periphery of the continuous fiber bundle in a net-like form; and
(c) a knitted fabric structure comprising yarns which form loops and covering the periphery of the continuous fiber bundle in a net-like form.

3. The reinforcing fiber/resin fiber composite for production of a continuous-fiber-reinforced thermoplastic resin composite material according to claim 1 or 2, wherein the continuous fiber bundle can be deformed in such a manner that the aspect ratio is a value of 1.2 or more.

4. The reinforcing fiber/resin fiber composite for production of a continuous-fiber-reinforced thermoplastic resin composite material according to claim 1 or 2, wherein the continuous fiber bundle can be deformed in such a manner that the aspect ratio is a value of 3 to 10.

5. A method for manufacturing a reinforcing fiber/resin fiber composite for production of a continuous-fiber-reinforced thermoplastic resin composite material,
the reinforcing fiber/resin fiber composite comprising:
a continuous fiber bundle; and
a thermoplastic resin fiber which covers the periphery of the continuous fiber bundle without tightening it,
wherein the continuous fiber bundle can be deformed so as to be flat,
the method comprising:
preparing a cover structure comprising a thermoplastic resin fiber so as to cover a guide having an outer diameter which is one size larger than that of the continuous fiber bundle; and
inserting and arranging the continuous fiber bundle inside the cover structure.

6. A method for manufacturing a reinforcing fiber/resin fiber composite for production of a continuous-fiber-reinforced thermoplastic resin composite material,
the reinforcing fiber/resin fiber composite comprising:
a continuous fiber bundle; and
a thermoplastic resin fiber which covers the periphery of the continuous fiber bundle without tightening it,
wherein the continuous fiber bundle can be deformed so as to be flat,
the method comprising:
preparing a cover structure comprising a thermoplastic resin fiber so as to cover a guide having an outer diameter which is one size larger than that of the continuous fiber bundle;
inserting the continuous fiber bundle inside the guide; and
extracting, from the guide, the continuous fiber bundle and the cover structure comprising the thermoplastic resin fiber at the same time, thereby inserting and arranging the continuous fiber bundle inside the cover structure.

7. The method for manufacturing a reinforcing fiber/resin fiber composite for production of a continuous-fiber-reinforced thermoplastic resin composite material according to claim 5 or 6, wherein the continuous fiber bundle can be deformed in such a manner that the aspect ratio is a value of 1.2 or more.

8. The method for manufacturing a reinforcing fiber/resin fiber composite for production of a continuous-fiber-reinforced thermoplastic resin composite material according to claim 5 or 6, wherein the continuous fiber bundle can be deformed in such a manner that the aspect ratio is a value of 3 to 10.
